# EUROPÄISCHE PATENTSCHRIFT

(11) **EP 1 005 716 B1**
(45) Veröffentlichungstag und Bekanntmachung des Hinweises auf die Patenterteilung: **14.11.2001**
(21) Anmeldenummer: 98942594.7
(22) Anmeldetag: 22.07.1998
(51) Int. Cl.: H02P 6/18, H02K 29/12

(54) **FREMDERREGTE ELEKTRISCHE MASCHINE**
SEPARATELY EXCITED ELECTRIC MACHINE
MOTEUR ELECTRIQUE A EXCITATION INDEPENDANTE

(30) Priorität: 18.08.1997 DE 29714604 U; 19.09.1997 DE 29716812 U
(43) Veröffentlichungstag der Anmeldung: 07.06.2000
(73) Patentinhaber: Strothmann, Rolf, 66123 Saarbrücken (DE)
(72) Erfinder: Strothmann, Rolf, 66123 Saarbrücken (DE)
(74) Vertreter: Bernhardt, Winfrid, Dr.-Ing.
(86) Internationale Anmeldenummer: EP9804594
(87) Internationale Veröffentlichungsnummer: WO9909645

(56) Entgegenhaltungen:
- EP-A- 0 183 277
- EP-A- 0 500 295
- DE-A- 2 511 567
- US-A- 5 254 914
- US-A- 5 256 923
- PATENT ABSTRACTS OF JAPAN vol. 010, no. 054 (E-385), 4. März 1986 & JP 60 207489 A (MATSUSHITA DENKI SANGYO KK), 19. Oktober 1985

## Beschreibung

Die Erfindung betrifft eine fremderregte elektrische Maschine mit einem Rotor und einem Stator sowie einer Einrichtung für die Ermittlung der Drehlage des Rotors in bezug auf den Stator, wobei die Lageermittlungseinrichtung zur Bestimmung der Rotordrehlage unter Auswertung eines an der Polwicklungsschaltung abgreifbaren, durch eine Drehlageabhängigkeit von Polwicklungsinduktivitäten geprägten Signals ausgebildet ist und die Polwicklungsschaltung im Stern verschaltete Phasenstränge aufweist.

In bekannten fremderregten elektrischen Maschinen sind als Einrichtung für die Ermittlung der Rotor-Stator-Lage Sensoren, z.B. Hallgeneratoren, vorgesehen, welche die Feldrichtung oder/und Feldstärke des erregenden Magneffeldes erfassen, wobei anhand dieser Meßwerte die Rotorposition in bezug auf den Stator bestimmt werden kann. Der Einbau solcher Sensoren in elektrische Maschinen erhöht deren Herstellungsaufwand. Ferner tritt oft der Nachteil auf, daß eine Kalibrierung der Sensoren erfolgen muß. Letztlich kann durch Anordnung solcher Sensoren auch eine die Laufeigenschaften der elektrischen Maschine beeinträchtigende Störung des Feldverlaufs im Motor entstehen.

Eine elektrische Maschine der eingangs erwähnten Art ist aus der US 5,254,914 bekannt. Zur Bestimmung der Rotordrehlage im Stillstand des Rotors werden kurze Stromimpulse durch ausgewählte Phasenstränge der Polwicklungsschaltung geschickt und in Reaktion auf die Impulse auftretende, abklingende Induktionsspannungen gemessen. Die Drehposition des Rotors wird auf der Basis des Vorzeichens der Differenz zwischen Abklingzeiten der Induktionsspannungen ermittelt.

Der vorliegenden Erfindung liegt die Aufgabe zugrunde, eine neue fremderregte elektrische Maschine der eingangs erwähnte Art zu schaffen, die bei einfachem Schaltungsaufbau eine zuverlässige Ermittlung der Rotordrehlage ermöglicht.

Die diese Aufgabe lösende fremderregte elektrische Maschine nach der Erfindung ist dadurch gekennzeichnet, daß die Lageermittlungseinrichtung zur Aufwertung des Potentials am Sternpunkt ausgebildet ist.

Drehlageabhängigkeiten von Polwicklungsinduktivitäten führen am Sternpunkt als erfindungsgemäß einzigem Meßpunkt zu Potentialschwankungen, die meßtechnisch mit geringem Schaltungsaufwand erfaßbar und zur Ermittlung der Rotordrehlage anhand vorgespeicherter Zuordnungsrelationen zwischen Potential und Drehlage bequem auswertbar sind.

Die Drehlogeabhängigkeit der Polwicklungsinduktivitäten kann auf Änderungen der Magnetisierung von Polwicklungskernen durch das Erregerfeld beruhen. Je nach relativer Anordnung von Polwicklungskernen und Erregerfeld können sich aufgrund der Abhängigkeit des für die Induktivität maßgebenden Induktionsflusses von der magnetischen Feldstärke des Erregerfeldes unterschiedliche Magnetisierungen der Polwicklungskerne ergeben, die sich auf die Induktivität der Polwicklungen auswirken.

Zusätzlich kann eine in Abhängigkeit von der Drehlage die Induktivität der Polwicklungen ändernde Anordnung magnetischer Materialien vorgesehen sein. Abhängig von der Drehlage ändert sich der jeweilige Beitrag der Magnetmaterialanordnung zur Induktivität der Polwicklungen.

In einer Ausführungsform der Maschine ist die Materialanordnung durch einen insbesondere zur Bildung des Rotors dienenden Feldmagnetträgerring gebildet, wobei sich entlang dem Umfang des Feldmagnetträgerrings die Materialstärke oder/und Permeabilität des Ringmaterials ändern kann. Die Materialstärke könnte sich z.B. dadurch ändern, daß der Feldmagnetträgerring auf der Feldmagnete tragenden Innenseite kreisrund ist, während er außenseitig unter ständiger Verdickung eine spiralförmige Mantellinie aufweist. In diesem Fall kann eine im Bereich einer vollen Drehung von 360° eindeutige Abhängigkeit der Polwicklungsinduktivität von der Drehlage erreicht werden. Eine über 360° zweideutige Abhängigkeit könnte durch Ausbildung der Ringaußenseite entsprechend einer unsymmetrischen Ovalform erreicht werden.

In einer weiteren Ausführungsform der Maschine ist das Erregerfeld und/oder die Materialanordnung zur Erzeugung eines mit der Rotordrehung periodisch wiederkehrenden Abhängigkeitsverlaufs der Polwicklungsinduktivität von der Drehlage vorgesehen, wobei die Lageermittlungseinrichtung zur periodenübergreifenden Bestimmung der Rotordrehlage eine von einem Startpunkt die Wiederkehr der Abhängigkeitsperioden erfassende Zähleinrichtung umfaßt. Der periodisch wiederkehrende Abhängigkeitsverlauf kann sich durch eine Vielzahl von aufeinanderfolgenden, das Erregerfeld bildenden magnetischen Perioden ergeben. Andererseits könnte sich die Materialstärke des Trägerrings entsprechend über dessen Umfang verteilt angeordneter Halterungsausnehmungen für Feldmagnete ändern. Eine Lagebestimmung anhand der genannten Abhängigkeit erfolgt dann jeweils innerhalb einer bestimmten Rotordrehwinkelperiode, während durch die Zähleinrichtung die betreffende Rotordrehwinkelperiode und damit die Lage des Rotors zum Stator im gesamten Drehwinkelbereich von 360° bestimmt werden kann.

Im Falle der Bildung einer magnetischen Periode durch zwei in je einer Halterungsausnehmung angeordneter Feldmagnete ergäbe sich eine eindeutige Abhängigkeit jeweils innerhalb einer halben magnetischen Periode, wobei in einer vielpoligen Maschine verteilt über den Umfang sich diese Abhängigkeit entsprechend der Anzahl von magnetischen Perioden wiederholt. Dehnt man die Halterungsausnehmungen auf eine oder mehrere Perioden aus, so ergeben sich eindeutige Abhängigkeiten jeweils innerhalb dieser ausgedehnten Winkelbereiche.

Vorzugsweise ist die Lageermittlungseinrichtung zur Erzeugung einer, insbesondere phasenstrangweise, an die Polwicklungen anlegbaren Meßspannung mit einer Frequenz vorzugsweise oberhalb der Betriebsspannungsfrequenz vorgesehen, wobei eine Auswerteinrichtung mit einer Filtereinrichtung zur Ausfilterung eines für die momentanen Stranginduktivitäten repräsentativen Signals aus dem Sternpunktpotential vorgesehen ist.

In einer besonders bevorzugten Ausführungsform der Erfindung ist zum Betrieb der Maschine eine Impulsbeschaltung, insbesondere unter Impulsweitenmodulation, vorgesehen, wobei die Lageermittlungseinrichtung zur Signalerfassung in Reaktion auf Spannungsimpulse auftretende Potentialverläufe auswerfet. Im Impulsbetrieb der Maschine ergibt sich am Sternpunkt ein schwankender Potentialverlauf mit entsprechend den momentanen Polwicklungsinduktivitäten variierenden Anstiegen.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: eine erfindungsgemäße elektrische Maschine mit einem Ausnehmungen für Feldmagnefe aufweisenden Feldmagnetträgerring, in einem Ausschnitt,
- Fig. 2a: einen Ausschnitt des Trägerrings der elektrischen Maschine von Fig. 1,
- Fig. 2b: einen durch den Trägerring von Fig. 2a verursachten Verlauf der Induktivität von Polwicklungen der elektrischen Maschine von Fig. 1,
- Fig. 3: ein Ausführungsbeispiel nach der Erfindung für eine Einrichtung zur Bestimmung der gegenseitigen Lage von Rotor und Stator in der elektrischen Maschine gemäß Fig. 1 in einer schematischen Darstellung. und
- Fig. 4: ein weiteres Ausführungsbeispiel für eine Einrichtung zur Bestimmung der Rotor-Stator-Lage in der Maschine gemäß Fig. 1 in schematischer Darstellung.

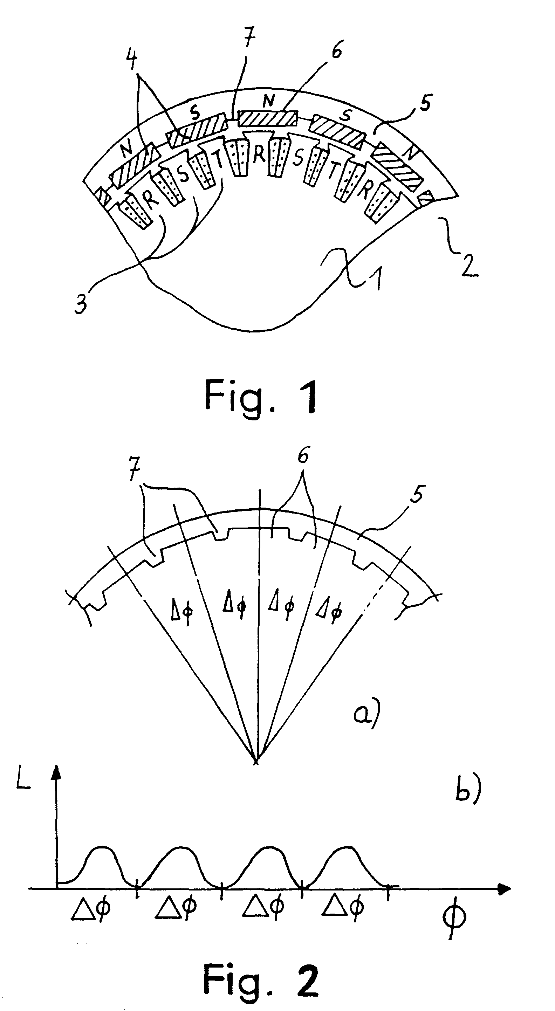

Mit dem Bezugszeichen 1 ist in der Fig. 1 ein Stator einer vielpoligen elektrischen Maschine bezeichnet, gegen welchen ein Rotor 2 drehbar ist.

An dem Stator 1 sind mit Wicklungen versehene Polköpfe 3 vorgesehen, welche der Innenseite des Rotors 2 mit ihrer jeweiligen Stimseite gegenüberliegen. Die Polwicklungen jedes dritten Polkopfes sind jeweils unter Bildung eines Phasenstrangs entsprechend drei Phasen R, S, T einer Betriebsspannung über in der Fig. 1 nicht sichtbare Leitungen verbunden.

Mit dem Bezugszeichen 4 sind in der Fig. 1 Permanentmagnete bezeichnet, wobei durch abwechselnde Anordnung eines magnetischen Nordpols und eines magnetischen Südpols aufeinanderfolgende, um den Umfang des ringförmigen Rotors 2 verteilte magnetische Perioden gebildet sind.

Wie insbesondere aus der Fig. 2a hervorgeht, sind für die Anbringung der Permanentmagnete 4 in einem zur Bildung des Rotors 2 dienenden Magnetträgerring 5 Ausnehmungen 6 für die Aufnahme der Permanentmagnete 4 vorgesehen, wobei zwischen den Ausnehmungen 6 Stege 7 gebildet sind.

Durch die aufeinanderfolgenden Stege 7 und Ausnehmungen 6 sind periodisch entsprechend einem Drehwinkel Δφ des Rotors 2 bestimmte Verteilungen des in dem gezeigten Ausführungsbeispiel aus Eisen bestehenden Ringmaterials gebildet, welche die Induktivität der jeweils gegenüberliegenden Polwicklung etwa entsprechend den in Fig. 2b gezeigten Abhängigkeiten beeinflußt, wobei ein Maximum der Induktivität bei jeder Wicklung dann auftritt, wenn die Wicklung einem Steg 7 gegenüberliegt.

In dem gezeigten Ausführungsbeispiel ist die elektrische Maschine symmetrisch derart aufgebauf, daß die Polwicklungen jedes Phasenstrangs in bezug auf eine ihr gegenüberliegende magnetische Periode die gleiche Lage einnehmen. Bei einer Verdrehung des Rotors ändert sich daher die Induktivität jeder Polwicklung eines Strangs in gleichem Maße. Im Unterschied dazu könnte die Symmetrie der elektrischen Maschine aber auch derart gebrochen sein, daß die Polköpfe eines Phasenstrangs jeweils eine unterschiedliche Lage in bezug auf die ihr gegenüberliegende magnetische Periode einnehmen.

Wie der Fig. 2b zu entnehmen ist, ergibt sich für jeden Drehwinkelabschnitt Δφ der gleiche Induktivitätsverlauf L, d.h., die Funktion L (α) mit α = 0 ... Δφ ist für jedes Intervall Δφ gleich.

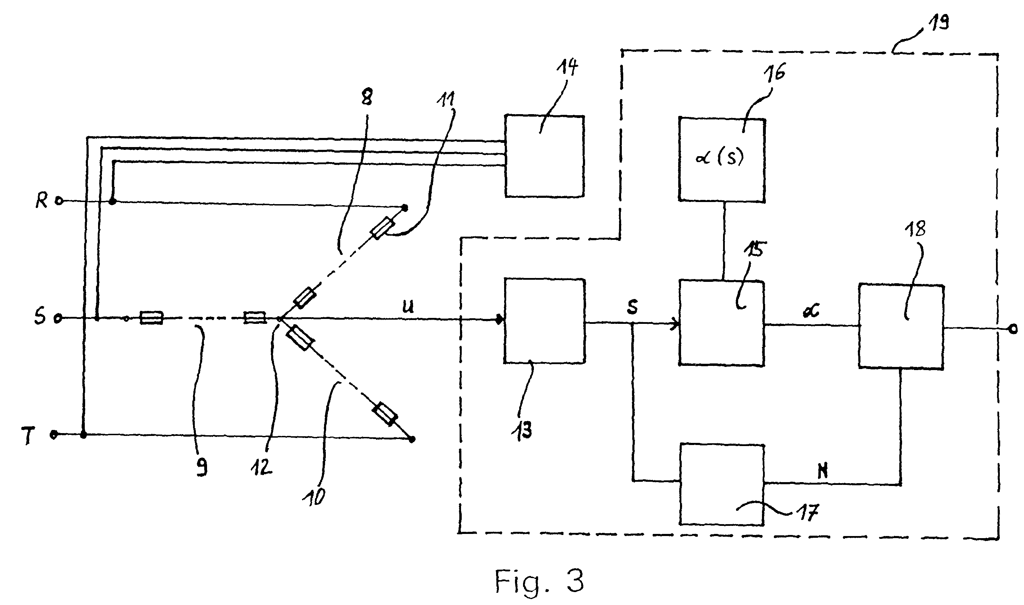

Es wird nun auf Fig. 3 Bezug genommen, wo mit den Bezugszeichen 8, 9 und 10 Polwicklungen 11 enthaltende Phasenstränge entsprechend Phasen R, S, T einer dreiphasigen Betriebsspannung bezeichnet sind. Die Phasenstränge 8 bis 10 sind unter Bildung eines Sternpunktes 12 verschaltet.

Mit dem Bezugszeichen 14 ist eine Meßspannungsquelle bezeichnet, durch welche den Phasenspannungen jeweils eine Meßspannung überlagert werden kann, deren Frequenz höher als die Frequenz von an die Phasen R, S, T gelegten Betriebswechselspannungen ist.

Mit dem Bezugszeichen 13 ist eine Filter-/Verstärkereinrichtung bezeichnet, welche ein am Sternpunkt 12 anliegendes Potential empfängt und ein Durchlaß- und/oder Verstärkungsmaximum bei der Frequenz der durch die Einrichtung 14 erzeugten Meßspannung aufweist.

Mit dem Bezugszeichen 15 ist in der Fig. 3 eine ein gefiltertes und/oder verstärktes Signal S aus der Filter-/Verstärkereinrichtung 13 empfangende Vergleichseinrichtung bezeichnet, welche das jeweilige Signal S mit Tabellenwerfen einer Funktion α (S) vergleicht und einen dem Wert von S entsprechenden Wert von α ausgibt. Die Tabellenwerte der Funktion α (S) sind in einer Speichereinrichtung 16 abgespeichert.

Mit 17 ist eine weitere das Signal S empfangende Zähleinrichtung bezeichnet, welche, z.B. anhand der Anzahl durchlaufener Maximalwerte von S, ausgehend von einer Startposition die Anzahl N der Intervalle Δφ eines Gesamtdrehwinkels φ bestimmt.

Mit dem Bezugszeichen 18 ist eine Einrichtung für die Berechnung des Gesamtdrehwinkels φ entsprechend der Formel φ = (N x Δφ) + α bezeichnet.

Die mit einer Strichlinie 19 umrissenen Einrichtungen 13 sowie 15 bis 18 bilden eine Auswerteinrichtung, welche zweckmäßig durch einen Computer implementiert ist.

Im Motorbetrieb der elektrischen Maschine von Fig. 1 ergibt sich am Sternpunkt 12 ein charakteristisches Spannungssignal U, das von der Stellung des Rotors innerhalb eines Winkelintervalls Δφ abhängig ist. Durch die Filter- und Verstärkereinrichtung 13 wird dieses Signal aus dem die Betriebsspannung enthaltenden Spannungssignal U extrahiert. Das am Ausgang der Filter-/Verstärkereinrichtung anliegende Signal S wird durch die Vergleichseinrichtung 15 ständig abgetastet, wobei während des Durchlaufens eines jeweiligen Winkelintervalls Δφ Signalwerte S in großer Zahl erfaßt und mit tabellierten Funktionswerten unter Ermittlung des jeweils zugehörigen Winkels α verglichen werden.

Die Zähleinrichtung 17 ermittelt ausgehend von einem Startintervall Δφ anhand durchlaufener Maxima von S die Anzahl N von durchlaufenden Intervallen Δφ.

Schließlich ermittelt die Berechnungseinrichtung 18 entsprechend der oben angegebenen Formel den Gesamtdrehwinkel φ.

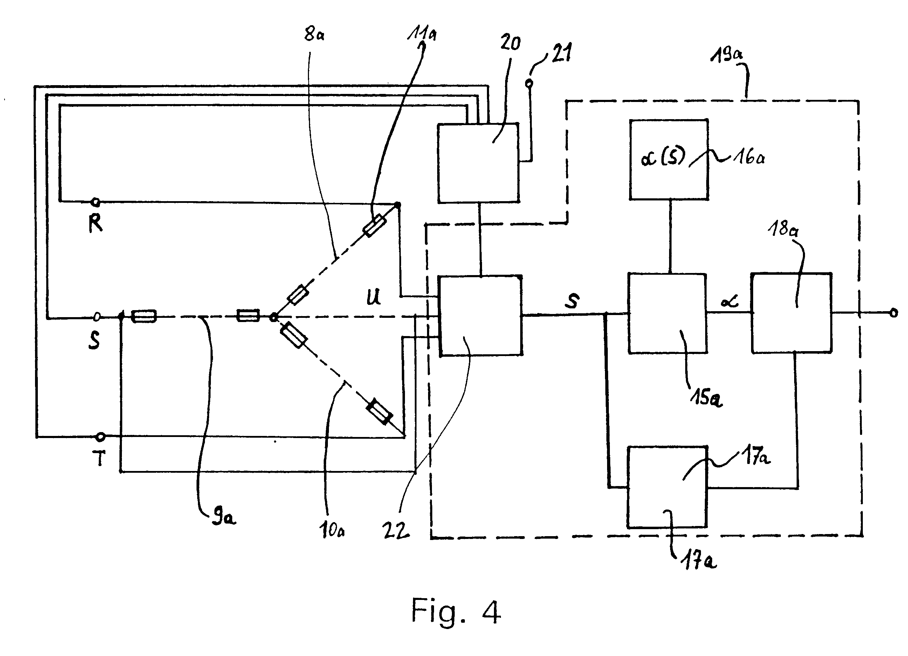

Es wird nun auf Fig. 4 Bezug genommen, wo gleiche oder gleichwirkende Teile mit derselben, jedoch mit dem Buchstaben a versehenen Bezugszahl wie in der Fig. 3 bezeichnet sind.

Mit dem Bezugszeichen 20 ist in der Fig. 4 eine Versorgungsschaltung bezeichnet, welche für drei Phasen R, S, T der elektrischen Maschine mit Phasensträngen 8a, 9a und 10a Betriebsspannungsimpulse liefert, wobei eine Implusweitenmodulation über einen Steuereingang 21 erfolgt.

Die Versorgungsschaltung 20 steht mit einer Signalaufbereitungseinrichtung 22 in Verbindung, welche Spannungssignale U von jeweiligen Phasenenden der Phasenstränge 8a, 9a und 10a empfängt. Die Signalaufbereitungseinrichtung 22 wirkt auf die Versorgungsschaltung 20 derart ein, daß jeweils von Phase zu Phase fortschreitend ein Phasenende von der Versorgungsschaltung 20 getrennt ist, wobei die Signalaufbereitungseinrichtung 22 jeweils ein in diesem getrennten Zustand an dem Phasenende anliegendes Signal U empfängt und verarbeitet. Die so erhaltenen, bei Einschalten der Impulse gebildeten Signale U sind insbesondere bezüglich des Anstiegs einerseits geprägt durch die jeweilige momentane Induktivität der betreffenden Phasenstränge und andererseits durch eine in dem freien Phasenstrang durch die Drehung der elektrischen Maschine induzierte Spannung. Die Signalaufbereitungseinrichtung 22 extrahiert aus den Signalen U, z.B. durch Differenz- oder Quotientenbildung, ein für die Drehlage repräsentatives Signal S. das, wie bereits anhand der Fig. 3 erläutert wurde, zur Ermittlung des Winkels a bzw. des Gesamtdrehwinkels φ verwendet werden kann.

Durch die fortschreitende Trennung von der Spannungsversorgungsschaltung 20 wird der dadurch entstehende Antriebsausfall in der elektrischen Maschine vorteilhaft auf alle Phasen gleichmäßig verteilt, so daß sich keine Beeinträchtigung des Laufs der Maschine ergibt.

In der Schaltung von Fig. 4 könnte entsprechend der eingezeichneten Strichlinie anstelle einer Auswertung des Potentials an freien Phasenenden erfindungsgemäß das Stempunktpotential ausgewertet werden. Im Impulsbetrieb ergibt sich dort ein schwankendes Spannungssignal U, aus dem neben einem für die Drehlage repräsentativen Signal weitere Größen, z.B. die Ströme in den einzelnen Phasen, ableitbar sind.

Der Verlauf des abgegriffenen Spannungssignals U ist in dem beschriebenen Ausführungsbeispiel in der Hauptsache durch periodische Änderungen der Polkopfmagnetisierung bestimmt, die sich beim Durchlaufen der Felder der Permanentmagneten 4 ergibt. Ein weiterer Beitrag zum Verlauf des Signals ergibt sich aus der Ausbildung des Magnetträger-rings 5 mit sich periodisch ändernder Dicke an magnetisierbarem Material, das die Induktivität der Polköpfe entsprechend wie in Fig. 2 gezeigt, beeinflußt.

Wird die Symmetrie gebrochen, so daß je Phase keine sich wiederholende Anordnung einer Polwicklung in bezug auf eine magnetische Periode auftritt, ergibt sich ein einer Sinuskurve stärker angenäherter Verlauf des Spannungssignals U, das sich dementsprechend leichter auswerten läßt.

## Patentansprüche

1. Fremderregte elektrische Maschine mit einem Rotor (2) und einem Stator (1) und einer Einrichtung für die Ermittlung der Drehlage des Rotors in bezug auf den Stator, wobei die Lageermittlungseinrichtung (19) zur Bestimmung der Rotordrehlage unter Auswertung eines an einer Polwicklungsschaltung abgreifbaren, durch eine Drehlageabhängigkeit von Polwicklungsinduktivitäten geprägten Signals ausgebildet ist und die Polwicklungsschaltung im Stern verschaltete Phasenstränge (8-10) aufweist, **dadurch gekennzeichnet, daß** die Lageermittlungseinrichtung zur Auswertung des Potentials am Sternpunkt (12) ausgebildet ist.

2. Elektrische Maschine nach Anspruch 1,
**dadurch gekennzeichnet,**
**daß** die Drehlageabhängigkeit der Polwicklungsinduktivitäten auf Änderungen der Magnetisierung von Polwicklungskernen durch das Erregerfeld beruht.

3. Elektrische Maschine nach Anspruch 1 oder 2,
**dadurch gekennzeichnet,**
**daß** eine in Abhängigkeit von der Drehlage die Induktivität der Polwicklungen ändernde Anordnung magnetischer Materialien vorhanden ist.

4. Elektrische Maschine nach Anspruch 3,
**dadurch gekennzeichnet,**
**daß** die Materialanordnung durch einen insbesondere zur Bildung des Rotors (2) dienenden Feldmagnetträgerring (5) gebildet ist.

5. Elektrische Maschine nach Anspruch 4,
**dadurch gekennzeichnet,**
**daß** sich entlang dem Umfang des Feldmagnetträgerrings (5) die Materialstärke oder/und Permeabilität des Ringmaterials ändert.

6. Elektrische Maschine nach einem der Ansprüche 1 bis 5,
**dadurch gekennzeichnet,**
**daß** das Erregerfeld und/oder die Materialanordnung zur Erzeugung eines mit der Rotordrehung periodisch wiederkehrenden Abhängigkeitsverlaufs der Polwicklungsinduktivität von der Rotordrehlage ausgebildet ist.

7. Elektrische Maschine nach Anspruch 6,
**dadurch gekennzeichnet,**
**daß** die Lageermittlungseinrichtung zur periodenübergreifenden Bestimmung der Rotordrehlage eine die Wiederkehr der Abhängigkeitsperioden erfassende Zähleinrichtung (17) umfaßt.

8. Elektrische Maschine nach einem der Ansprüche 4 bis 7,
**dadurch gekennzeichnet,**
**daß** sich die Materialstärke des Trägerrings (5) entsprechend über dessen Umfang verteilt angeordneten Halterungsausnehmungen (6) für Feldmagnete (4) ändert.

9. Elektrische Maschine nach einem der Ansprüche 1 bis 8,
**dadurch gekennzeichnet,**
**daß** die Lageermittlungseinrichtung zur Erzeugung einer insbesondere phasenstrangweise an die Polwicklungen anlegbaren Meßspannung mit einer Frequenz vorzugsweise oberhalb der Betriebsspannungsfrequenz ausgebildet ist.

10. Elektrische Maschine nach einem der Ansprüche 1 bis 9,
**dadurch gekennzeichnet,**
**daß** die Lageermittlungseinrichtung eine Filtereinrichtung (13) zur Ausfilterung eines für die Rotordrehlage repräsentativen Meßsignals (S) aufweist.

11. Elektrische Maschine nach einem der Ansprüche 1 bis 10,
**dadurch gekennzeichnet,**
**daß** zum Maschinenbetrieb eine Impulsbeschaltung, insbesondere unter Impulsweitenmodulation, vorhanden ist, und die Lageermittlungseinrichtung, insbesondere kontinuierlich, in Reaktion auf Spannungsimpulse auftretende Potentialverläufe, ggf. unter zusätzlicher Ermittlung von Phasenstrangströmen, auswertet.

## Claims

1. Separately excited electrical machine having a rotor (2) and a stator (1), and having a device for determining the rotation position of the rotor in respect to the stator, in which case the position determination device (19) is designed to establish the rotor rotation position by evaluation of a signal which can be tapped off from a pole winding circuit and is influenced by the rotation position dependency of pole winding inductances, and the pole winding circuit has star-connected phase sections (8-10), **characterized in that** the position determination device is designed to evaluate the potential at the star point (12).

2. Electrical machine according to Claim 1,
**characterized**
**in that** the rotation position dependency of the pole winding inductances is based on changes of the magnetization of pole winding cores caused by the excitation field.

3. Electrical machine according to Claim 1 or 2,
**characterized**
**in that** an arrangement of magnetic materials is provided, which varies the inductance of the pole windings as a function of the rotation position.

4. Electrical machine according to Claim 3,
**characterized in that** the material arrangement is formed by a field magnet supporting ring (5) which is used, in particular, to form the rotor (2).

5. Electrical machine according to Claim 4,
**characterized in that** the material thickness and/or permeability of the ring material varies along the circumference of the field magnet supporting ring (5).

6. Electrical machine according to one of Claims 1 to 5,
**characterized**
**in that** the excitation field and/or the material arrangement are designed to produce a dependency profile, which recurs periodically with the rotor rotation, between the pole winding inductance and the rotor rotation position.

7. Electrical machine according to Claim 6,
**characterized**
**in that** the position determination device comprises a counting device (17), which detects the recurrence of the dependency periods, in order to establish the rotor rotation position over more than one period.

8. Electrical machine according to one of Claims 4 to 7,
**characterized**
**in that** the material thickness of the supporting ring (5) varies in a corresponding manner to holder recesses (6), which are arranged distributed over its circumference, for field magnets (4).

9. Electrical machine according to one of Claims 1 to 8,
**characterized**
**in that** the position determination device is designed to produce a measurement voltage which can, in particular, be applied on a phase winding section basis to the pole windings, at a frequency which is preferably above the operating voltage frequency.

10. Electrical machine according to one of Claims 1 to 9,
**characterized**
**in that** the position determination device has a filter device (13) for filtering out a measurement signal (S) which is representative of the rotor rotation position.

11. Electrical machine according to one of Claims 1 to 10,
**characterized**
**in that** a pulsed circuit, in particular using pulse width modulation, is provided for machine operation, and the position determination device evaluates potential profiles which occur, in particular continuously, as a reaction to voltage pulses, while possibly additionally determining phase winding section currents.

## Revendications

1. Machine électrique à excitation indépendante présentant un rotor (2) et un stator (1) et un dispositif pour déterminer la position de rotation du rotor par rapport au stator, le dispositif de détermination de la position (19) étant formé à déterminer la position de rotation du rotor avec une évaluation d'un signal pouvant être prélevé sur un câblage de bobinage d'excitation, influencé par une dépendance de la position de rotation des inductances du bobinage et le cablage de bobinage d'excitation présentant des conducteurs de phase (8-10) câblés en étoile, **caractérisée en ce que** le dispositif de détermination de la position est formé à évaluer le potentiel au point neutre (12).

2. Machine électrique selon la revendication 1, **caractérisée en ce que** la dépendance de la position de rotation des inductances du bobinage d'excitation repose sur des modifications de la magnétisation des noyaux du bobinage d'excitation par le champ d'excitation.

3. Machine électrique selon la revendication 1 ou 2, **caractérisée en ce qu'**un dispositif en matériaux magnétiques modifiant l'inductance des bobinages d'excitation en fonction de la position de rotation est présent.

4. Machine électrique selon la revendication 3, **caractérisée en ce que** le dispositif de matériaux est formé par un anneau (5) de support des aimants du champ servant en particulier à la réalisation du rotor (2).

5. Machine électrique selon la revendication 4, **caractérisée en ce que** l'épaisseur du matériau et/ou la perméabilité du matériau annulaire se modifie le long du périmètre de l'anneau (5) de support des aimants du champ.

6. Machine électrique selon l'une quelconque des revendications 1 à 5,
**caractérisée en ce que** le champ d'excitation et/ou le dispositif de matériaux est formé à obtenir un profil de dépendance de l'inductance du bobinage d'excitation de la position de rotation du rotor revenant périodiquement avec la rotation du rotor.

7. Machine électrique selon la revendication 6, **caractérisée en ce que** le dispositif de détermination de la position comprend, pour la détermination de la position de rotation du rotor sur plusieurs périodes, un dispositif de comptage (17) enregistrant la répétition des périodes de dépendance.

8. Machine électrique selon l'une quelconque des revendications 4 à 7,
**caractérisée en ce que** l'épaisseur du matériau de l'anneau support (8) se modifie en fonction d'évidements de fixation (6) répartis sur son périmètre pour des aimants de champ (4).

9. Machine électrique selon l'une quelconque des revendications 1 à 8,
**caractérisée en ce que** le dispositif de détermination de la position est formé à obtenir une tension de mesure pouvant être appliquée aux bobinages d'excitation, en particulier selon les conducteurs de phase, à une fréquence de préférence supérieure à la fréquence de la tension de travail.

10. Machine électrique selon l'une quelconque des revendications 1 à 9,
**caractérisée en ce que** le dispositif de détermination de la position présente un dispositif de filtrage (13) pour filtrer un signal de mesure (S) représentatif de la position de rotation du rotor.

11. Machine électrique selon l'une quelconque des revendications 1 à 10,
**caractérisée en ce que**, pour le fonctionnement de la machine, une commutation par impulsions, en particulier avec une modulation de la largeur des impulsions, est présente et **en ce que** le dispositif de détermination de la position évalue, en particulier en continu, des profils de potentiel produits en réaction à des impulsions de tension, le cas échéant avec une détermination supplémentaire des courants dans les conducteurs de phase.
